# DEMANDE DE BREVET EUROPEEN

(11) **EP 4 455 923 A1**
(43) Date de publication de la demande: **30.10.2024**
(21) Numéro de dépôt: 23315120.8
(22) Date de dépôt: 27.04.2023
(51) Int. Cl.: G06F 21/62, H04L 9/00, G06Q 50/00

(54) **PROCÉDÉ D'EXPLOITATION DE DONNÉES CRYPTÉES ACCESSIBLES DEPUIS UNE CHAÎNE DE BLOCS**

(71) Demandeur: Lenfant, Eric, 59500 Douai (FR); van Erp, Gauthier, 1390 Grez-Doiceau (BE); Delfort, Thomas, London SE10 0UF (GB); Vidal, Florian, 78150 Le Chesnay-Rocquencourt (FR)
(72) Inventeur: LENFANT, Eric, 59500 Douai (FR); VAN ERP, Gauthier, 1390 Grez-Doiceau (BE); DELFORT, Thomas, London, Se10 0UF (GB); VIDAL, Florian, 78150 Le Chesnay-Rocquencourt (FR)
(74) Mandataire: Gevers Patents

(57) **Abrégé**

L'invention concerne un procédé d'exploitation de données cryptées accessibles depuis une chaîne de blocs (5), comprenant une utilisation (61, 62) d'un tag (1) reproduit sur un support physique (2), ainsi qu'un accès (71, 72) à ces données cryptées mis en oeuvre par ordinateur consécutivement à l'utilisation de ce tag (1).

## Description

### Domaine technique

L'invention concerne un procédé d'exploitation de données cryptées qui sont accessibles depuis une chaîne de blocs.

### Art antérieur

De nombreux services digitaux sont aujourd'hui proposés sur l'Internet. Ces services sont en général associés à un site web, parfois accessibles à partir d'un QR code correspondant à un lien renvoyant à l'adresse URL du site web.

Il est cependant difficile pour l'utilisateur d'un tel service digital d'être certain de l'identité de l'initiateur du service. L'utilisation du QR code ne garantit pas non plus l'auteur, l'origine ou la véracité dudit lien.

Il existe dès lors un besoin d'authentifier l'initiateur ou le propriétaire d'un tel service et de l'associer de façon fiable et sécurisé au service qu'il propose.

### Exposé de l'invention

Un objet de la présente invention est de fournir des moyens permettant cette authentification et cette association de façon fiable et sécurisée.

Dans ce but, cette invention propose un procédé d'exploitation de données accessibles depuis une chaîne de blocs (« blockchain » en anglais), typiquement stockées dans la chaîne de blocs. Les données sont de préférence cryptées ou, à tout du moins, sont accessibles depuis la chaîne de blocs sous forme cryptée. Le procédé comprend une utilisation d'un tag reproduit, par exemple imprimé, sur un support physique, et un accès à ces données mis en oeuvre par des moyens de traitement numérique, typiquement par ordinateur, consécutivement à l'utilisation de ce tag.

De préférence, ces données mettent en oeuvre, ou à tout du moins visent à mettre en oeuvre, un service digital, par exemple, sans s'y limiter, par partage des données et/ou de façon algorithmique, par exemple pour des données au moins en partie sous la forme d'un programme d'ordinateur.

Comme le tag est associé à des données cryptées dans la chaîne de blocs, cette association est à la fois authentifiable, infalsifiable et non fongible. L'identité de l'initiateur ou du propriétaire de ces données (et donc du service digital qu'elles mettent en oeuvre le cas échéant) peut de cette façon être garantie et certifiée à partir du tag comme objet physique. L'utilisation de la chaîne de blocs garantit un espace de données unique, sécurisé et crypté pour les données. L'utilisation d'un tag reproduit sur un support physique permet un partage sécurisé en consultation des données cryptées, mais aussi de faire correspondre ces données à un objet physique, par exemple, afin d'identifier cet objet de façon fiable et sécurisée.

Le terme « tag », dans le cadre de ce document, désigne de préférence une représentation d'une signature numérique et/ou électronique permettant d'accéder aux données cryptées. Le tag comprend préférentiellement un code-barre à deux dimensions. Il est de préférence normé et codé au format PDF-417, se distinguant ainsi d'un QR code par la possibilité d'offrir un grand nombre de codages distincts. En particulier, chaque code-barre correspond de préférence à une chaîne alpha-numérique du type « [X] - N - 23 caractères alphanumériques » où [X] renseigne plusieurs caractères d'identification associés aux données cryptées (par exemple, un nom, un service digital, une marque de produits, ...), N renseigne des chiffres d'un numéro de série pour [X], et les 23 caractères alphanumériques constituent un checksum permettant de vérifier l'intégrité et la validité du tag.

La correspondance entre une chaîne alpha-numérique et un tel code-barre peut être établie par des moyens connus d'un homme du métier. En amont d'une l'exécution du procédé selon l'invention, le tag est de préférence enregistré dans la chaîne de blocs, par exemple, sous la forme de cette chaîne alpha-numérique, de façon à être recensé, authentifiable et associés de façon sécurisé et fiable aux données cryptées présentes et/ou à venir.

Le tag, et de préférence le code-barre dans le cas de la réalisation exposée ci-dessus, est préférentiellement unique. En d'autres termes, pour des données déterminées accessibles depuis une chaîne de blocs au moyen du procédé selon l'invention, ce tag est le seul donc l'utilisation permet d'accéder auxdites données. De cette façon, ces données (et le service digital qu'elles mettent éventuellement en oeuvre) peuvent être identifiées de façon sécurisé et univoque à partir du seul tag. En outre, comme le tag comprend de préférence une représentation codée et/ou complexe, il est rendu complexe de le falsifier.

Le support physique sur lequel le tag est reproduit est préférentiellement une étiquette, par exemple un sticker. Avantageusement, l'étiquette peut être fixée sur n'importe quel objet (par exemple, en la collant, en la cousant, en la soudant, ou en l'attachant de quelconque manière à l'objet). Le tag est plus préférentiellement imprimé sur le support physique. La reproduction (ou impression) du tag peut être réalisée par impression 2D ou 3D lors de la création du support physique, par un moulage sur le support physique, et/ou par usinage, par exemple par gravure, sur le support physique. Ces exemples sont non limitatifs.

Le tag est au coeur de la présente invention. Il permet en particulier d'établir une correspondance unique de façon sécurisée et fiable entre un objet du monde physique, typiquement un objet sur lequel est apposé le tag par l'intermédiaire du support physique ou ce support physique lui-même, et un objet du monde virtuel, typiquement une partie de la chaîne de blocs correspondante. La correspondance susdite est en particulier avantageuse lorsque les données cryptées en question se réfère à l'objet du monde physique. Il peut s'agir de données d'authentification ou de certification de l'objet, par exemple, de sorte que le tag permet à l'utilisateur et/ou l'acquéreur de l'objet d'établir cette authentification ou certification de façon fiable et sécurisée.

L'usage, dans ce document, du verbe « comprendre », de ses variantes, ou de ses conjugaisons, n'exclut en aucune façon la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier » et « deuxième » sont quant à eux utilisés dans ce document pour différencier différents éléments, et ce sans impliquer d'ordre entre ces éléments.

Les termes « données cryptées » et « données » sont généralement utilisés de façon équivalente dans le présent document lorsqu'il s'agit de faire référence aux données accessibles depuis la chaîne de blocs.

Dans le cadre de ce document, les termes « mis en oeuvre par ordinateur » en référence à tout ou partie d'un procédé (en l'occurrence l'étape d'accès dans le cas de la présente invention) impliquent une mise en oeuvre par l'utilisation d'un ordinateur, d'un réseau informatique ou d'un autre appareil programmable et dont une ou plusieurs étapes ou caractéristiques sont réalisées totalement ou en partie par un programme d'ordinateur. En particulier, le terme « ordinateur » n'est pas à interpréter de façon restrictive comme limitant la mise en oeuvre au moyen d'un seul ordinateur physique classique. La mise en oeuvre du procédé peut impliquer plus généralement divers moyens de traitement numérique comme un ordinateur, un smartphone, un réseaux informatique, un système informatique distribué et/ou un serveur, cette liste étant non limitative.

Selon un mode de réalisation de l'invention, l'utilisation du tag comprend une lecture du tag au moyen d'un dispositif électronique. Une mise en oeuvre de cette utilisation est aisée. La lecture est préférentiellement une lecture par balayage. De préférence il s'agit d'un scan. Elle peut être réalisée par tout dispositif électronique approprié à cet usage connu d'un homme du métier, par exemple un smartphone optionnellement muni d'une application numérique adaptée. Plus généralement, le dispositif électronique comprend de préférence une caméra ou un lecteur optique pour la lecture du tag. De préférence, lorsque qu'un code-barre est compris dans le tag, l'utilisation du tag consiste en la lecture de ce code-barre.

L'accès aux données comprend de préférence une communication entre le dispositif électronique et la chaîne de blocs via une application numérique. Celle-ci est de préférence installée sur le dispositif électronique et/ou exécutée par ce dernier, par exemple au moyen d'un processeur du dispositif électronique. Ladite communication est, par exemple, établie par connexion sans fil avec un système informatique distribué mettant en oeuvre la chaîne de blocs.

De préférence, l'accès aux données n'est possible que si le tag lu est dans un format reconnu par l'application mobile. Ceci permet d'éviter des erreurs et/ou falsification dans l'accès aux données. Ainsi, seul un tag fournit dans ce format et qui est de préférence préalablement enregistré dans la chaîne de blocs permettra de mettre en oeuvre le procédé selon l'invention.

Il est introduit ci-après deux cas distincts d'exploitation des données dans la chaîne de blocs : celui où l'utilisation du tag est la première, et celui où l'utilisation du tag est une utilisation ultérieure. Pour des données cryptées mettant en oeuvre un service digital, ces deux cas correspondent préférentiellement respectivement à deux phases d'exploitation des données : l'initiation et l'utilisation de ce service digital.

### Première utilisation

Lorsque l'utilisation du tag est une première utilisation, l'accès aux données cryptées comprend préférentiellement une création d'une sous-chaîne de blocs de la chaîne de blocs à partir d'un ou plusieurs blocs de celle-ci donnant accès aux données cryptées. Les données cryptées sont alors de préférence complétées (de façon progressive) par des données additionnelles correspondant aux blocs de la sous-chaîne de blocs lors de sa création.

La sous-chaîne de blocs introduit ci-dessus correspond ainsi à un espace de données unique, sécurisé et crypté dans la chaîne de blocs. Le premier utilisateur du tag donne naissance à cet espace et il en devient de préférence propriétaire et/ou gestionnaire. Celui-ci peut plus préférentiellement modifier et/ou supprimer cet espace sans affecter le reste de la chaîne de blocs. La première utilisation du tag permet ainsi à l'utilisateur de devenir prioritaire du tag, au même titre que des données et de l'éventuel service digital correspondant. Ce service digital est en particulier mis en oeuvre par les données cryptées de la sous-chaîne créée par l'utilisateur. Ce mode de réalisation permet d'associer de façon d'autant plus fiable et sécurisée les données et l'éventuel service digital qu'elles mettent en oeuvre à leur initiateur et/ou propriétaire.

De préférence, le ou les blocs à partir desquels la sous-chaîne de blocs est créée correspondent à un enregistrement et/ou au recensement du tag de façon authentifiable dans la chaîne de blocs comme il est décrit ci-avant. De préférence, l'accès à ces données consécutivement à la première utilisation du tag comprend l'ajout une donnée de temps à la chaîne de bloc, par exemple comme un premier bloc de la sous-chaîne de blocs créé à partir du ou desdits blocs. Cet ajout peut être implémenté de façon algorithmique dans la chaîne de blocs de façon connue d'un homme du métier. La donnée de temps permet de donner au tag un temps de référence par rapport à la date de son enregistrement et/ou recensement dans la chaîne de blocs. Elle permet aussi de préférence d'acter la première utilisation du tag et donc son activation et/ou de l'initiation de l'éventuel service digital qui est ou sera associé aux données.

Lorsqu'un dispositif électronique est utilisé afin de lire le tag et d'établir une communication avec la chaîne de blocs via une application numérique, la sous-chaîne de blocs est de préférence créée par des instructions transmises à partir du dispositif électronique via l'application numérique (par ladite communication). De préférence, ces instructions correspondent ou sont équivalentes aux données cryptées additionnelles susdites. En d'autres termes, les données cryptées sont complétées par les données additionnelles au moyen des instructions d'utilisateur qui sont transmises par la communication à partir du dispositif électronique. Ces instructions peuvent par exemple être des données cryptées ou à crypter dans la chaîne de blocs pour fournir une information de façon sécurisée et fiable. Il peut aussi s'agir d'instructions sous forme algorithmique ou de programme d'ordinateur pour implémenter un processus associé à un service digital. Avantageusement, par cette communication, il est rendu aisé de créer la sous-chaîne de blocs et les éventuels services digitaux correspondant.

Optionnellement, la création de la sous-chaîne de blocs peut s'accompagner du renvoi, via la communication, d'une clé numérique d'accès dédiée permettant à l'initiateur de la sous-chaîne de blocs de la modifier, voire de la supprimer, après sa création. La clé peut être transmise et stockée sur le dispositif électronique, par exemple sous forme cryptée illisible sans disposer de l'application numérique. La sous-chaîne de blocs peut alors optionnellement être modifiée, voire supprimée, après sa création au moyen de la clé et par transmission d'instructions ultérieures à partir du dispositif électronique via l'application numérique.

Les données cryptées sont ainsi de préférence complétées par des données additionnelles correspondant aux blocs de la sous-chaîne de blocs lorsque celle-ci est modifiée. Il est ainsi possible pour l'utilisateur d'améliorer, de modifier et/ou de compléter les données cryptées et l'éventuel service digital correspondant après la première utilisation du tag.

Le terme « données » se voit ainsi donner une signification dynamique, dans le cadre de ce document, selon le stade d'exploitation des données, notamment avant et/ou après la création et/ou la modification de la sous-chaîne de blocs.

### Utilisation ultérieure

Lorsque l'utilisation du tag est une deuxième utilisation ou une utilisation ultérieure (à la deuxième), l'accès aux données cryptées est de préférence limité à un accès en lecture et/ou en exécution d'un programme informatique depuis la chaîne de blocs. Un tel programme informatique est typiquement sous-jacent aux données cryptées comme il est exposé ci-avant, de telle sorte qu'une exécution du programme peut également relever de l'ordre d'un « accès en lecture » dans le cadre de ce document. Un « accès en lecture » ne comprend typiquement pas de possibilité de modifier les données.

La deuxième utilisation et/ou l'utilisation ultérieure peut en particulier se faire d'un quelconque dispositif électronique apte à lire le tag et muni de l'application numérique comme présenté ci-avant, de façon à établir une communication avec la chaîne de blocs, ou de façon plus précise la sous-chaîne de blocs. Lors d'une exécution du procédé, ce dispositif électronique n'est d'ailleurs généralement pas celui à partir duquel la première utilisation du tag et/ou la création de la sous-chaîne de blocs ont été rendues possibles. Il s'agit plutôt d'un quelconque autre dispositif électronique d'un tiers souhaitant consulter les données et/ou utiliser un éventuel service digital qu'elles mettent en œuvre.

Grâce à ce mode de réalisation de l'invention, les données cryptées peuvent être consultées de façon tout à fait sécurisée et sans risque d'être corrompues car seule un accès en lecture est rendu possible à partir d'une utilisation du tag qui n'est pas la première utilisation. De la même façon, le service digital mis en oeuvre par ces données peut être utilisé de façon tout aussi sécurisée et fiable. En outre, l'initiateur et/ou le propriétaire de ces données et/ou de ce service digital peut être authentifié au besoin de façon fiable.

### Applications

Le procédé de l'invention, et en particulier les modes de réalisation exposés ci-dessus, peut être utilisé pour mettre en oeuvre de nombreux services digitaux via les données cryptées. Des exemples non limitatifs de tels services sont fournis ci-dessous.

*Exemple 1. Un service en partage et consultation de données secrètes et*/*ou sensibles.* Il est possible d'utiliser le procédé afin de consulter de telles données sous une forme cryptée dans la chaîne de blocs. L'accès à ces données se fait consécutivement à l'utilisation d'un tag correspondant.

Selon les modes de réalisation susmentionnés, l'initiateur du service intègre ces données dans la chaîne de blocs, par exemple lors de la création de la sous-chaîne de blocs, consécutivement à la première utilisation du tag. Un tiers ayant alors accès (physiquement) au tag et disposant d'un dispositif électronique et de l'application mobile peut accéder de façon sécurisée aux données en lecture par une utilisation ultérieure du tag.

*Exemple 2. Un service de réseau social.* En effet, il est possible d'utiliser le procédé de l'invention semblablement à l'exemple 1 ci-dessus pour toute donnée, sensible ou non. En particulier, les données peuvent constituer un réseau social personnel dans la chaîne de blocs constitué par l'acquéreur, ou à tout du moins le premier utilisateur, du tag. L'accès au réseau social est alors donné en lecture à un nombre limité et contrôlé de personnes via une mise à disposition du tag. Les données sont alors par exemple relatives à l'initiateur de ce service digital.

De façon plus globale, un tel « réseau social » se distingue des exemples de réseaux sociaux connus à ce jour de par son caractère totalement décentralisé. Chaque membre n'est plus relié à un compte d'une seule entité, mais possède et contrôle son propre réseau social, typiquement sous la forme d'une sous-chaîne de blocs d'une même chaîne de blocs, associée à un tag. Le contenu de chacun des réseaux sociaux personnels (correspondant à des données cryptées dans la chaîne de blocs) est accessible via le tag correspondant. Ce type de réseau social est indépendant d'entités telles les GAFA, notamment de leur contrôle, et permet une authentification fiable et sécurisée de chaque membre. Un tel réseau social peut en outre être supprimé facilement selon des instructions de son initiateur par écrasement de la sous-chaîne de blocs correspondante dans la chaîne de blocs.

*Exemple 3. Un service d'information sur des monuments.* Le procédé selon l'invention permet de consulter des données ayant trait à un monument sous une forme cryptée dans la chaîne de blocs. Ces données sont intégrées à la chaîne de blocs suite à une première utilisation du tag, comme décrit ci-avant. L'accès à ces données peut alors se faire consécutivement à une utilisation ultérieure de ce tag, le support physique de ce tag étant de préférence fixé au monument.

Ceci s'applique lorsque le monument est une tombe. Dans un tel cas, il peut être envisagé de fixer sur la tombe d'un défunt le support physique sur lequel le tag associé à un réseau social dudit défunt selon l'exemple 2 est reproduit afin de faire perdurer sa mémoire. Ceci peut également rendre les obsèques d'un défunt moins coûteuse. En effet, dans ce cas, il n'est plus nécessaire de graver son nom ou d'autres données sur une pierre tombale, l'utilisation du simple tag permettant un accès à ces données.

*Exemple 4. Un service d'authentification d'objet physique.* Le procédé selon l'invention est utile pour lutter contre la contrefaçon et authentifier de façon sûre et fiable d'un objet physique. Pour ce faire, il suffit de reproduire un tag pour la mise en oeuvre de l'invention sur l'objet (ce dernier devenant alors un support physique au sens de l'invention), ou de fixer sur l'objet un support physique (par exemple, une simple étiquette) sur lequel le tag est reproduit. Le fabriquant de l'objet peut alors intégrer des données d'authentification (et plus généralement d'information) dans la chaîne de blocs par une première utilisation du tag comme il est exposé ci-dessus. L'acheteur de l'objet, par une utilisation ultérieure du tag comme décrite ci-dessus, pourra ensuite consulter de façon sécurisée et fiable ces données, et authentifier, par exemple, le fabricant et l'origine de l'objet.

De la même façon, il est possible alternativement d'implémenter un réseau social selon l'exemple 2 correspondant à un tel objet dans le cas où le tag attaché à l'objet physique n'aurait pas encore été utilisé. De cette façon, l'objet prend vie dans un monde virtuel qui correspond à une partie de la chaîne de blocs. Comme le comprendra l'homme du métier, il est bien sûr également possible de mettre en oeuvre ces deux applications en utilisant deux tags distincts.

*Exemple 5. Un service de sonnette digitale.* Selon une réalisation préférée de la présente invention, les données cryptées mettent en oeuvre un service de transmission d'un signal au dispositif électronique à partir duquel sont transmises les instructions de création de la sous-chaîne de blocs lorsque l'utilisation du tag est une deuxième utilisation ou une utilisation ultérieure. Ce service digital permet avantageusement de transmettre un signal au dispositif électronique. Le signal est de préférence sonore et/ou lumineux selon les moyens dont dispose le dispositif électronique pour mettre en oeuvre ce signal. La transmission du signal peut aussi induire l'activation d'une fonction du dispositif électronique, par exemple, un haut-parleur et/ou une caméra s'il en comprend. Chacun de ces exemples est possible dans le cas préféré d'un dispositif électronique consistant en un smartphone.

La première utilisation du tag permet préférentiellement de définir ce signal. Par exemple, un accès aux fonctionnalités du dispositif électronique automatique via l'application numérique facilite la tâche de l'initiateur du service à une simple sélection d'une ou plusieurs de ces fonctionnalités à activer lorsque le signal est reçu. Cette sélection est enregistrée comme données cryptées dans la chaîne de blocs, comme paramétrisation du service digital. L'accès à ces données permet ainsi la mise en oeuvre du service, soit la transmission du signal.

Ce service digital peut avantageusement être utilisé comme sonnette digital. Pour ce faire, il suffit de fixer le support physique sur lequel est reproduit le tag sur un élément constitutif d'une construction accessible par un tier, par exemple, un mur ou une porte, typiquement sur ou à côté d'une porte d'entrée d'un bâtiment. Lors d'une utilisation ultérieure du tag à partir d'un dispositif électronique d'un tier, un signal est transmis au dispositif électronique de l'initiateur du service, soit celui qui a utilisé le tag pour la première fois. De cette façon, l'initiateur est averti de la présence du tier à l'endroit où le support physique a été fixé, par exemple, en face de la portée d'entrée de son habitation. Dans le cas de dispositifs électroniques constituant en des téléphones mobiles, typiquement des smartphones, il peut être prévu que la transmission du signal au téléphone mobile de l'initiateur se traduise par un appel téléphonique à partir téléphone mobile du tiers. Procéder de la sorte permet notamment à l'initiateur d'éviter de transmettre son numéro de téléphone de façon publique et corruptible (par exemple, au moyen d'un simple papier collé sur l'élément constitutif de la construction).

Un autre avantage d'utiliser le procédé selon ce mode de réalisation préféré pour mettre en oeuvre un service de sonnette digital est le coût associé. Alors que l'installation d'une sonnette physique classique coûte plusieurs centaines d'euros, l'installation de la sonnette digital ne coutera que le prix du support physique sur lequel le tag est reproduit. La sonnette digital a également l'avantage de ne pas nécessiter de travaux physique spécifique (tels qu'un passage de câbles ou une installation de boîtier de sonnette) dans la construction, par exemple, l'habitation, de la personne qui souhaite en bénéficier. L'installation d'une telle sonnette digital et son entretien sont donc rendus beaucoup plus aisés par rapport à une sonnette physique.

Bien que le mode de réalisation du procédé décrit ci-dessus vise à mettre en oeuvre la transmission d'un signal au dispositif électronique à partir duquel sont transmises les instructions de création de la sous-chaîne de blocs, l'homme du métier comprendra directement que ce mode de réalisation peut être adapté de façon équivalente au cas où le signal est transmis à un dispositif électronique quelconque, moyennant l'intégration manuelle des données correspondantes à ce dispositif électronique dans la sous-chaîne de blocs (comme paramétrisation du service digital) consécutivement à la première utilisation du tag.

### Autres objets de la présente invention

L'invention propose également un support physique comprenant un tag pour la mise en oeuvre du procédé selon l'invention. Le tag est donc tel qu'un accès à des données cryptées accessibles depuis une chaîne de blocs est rendu possible consécutivement à son utilisation. L'ensemble des modes de réalisation ainsi que l'ensemble des avantages du procédé selon la présente invention se transposent *mutatis mutandis* au présent support physique. En particulier, les considérations concernant le tag mentionnée ci-avant dans l'exposé de l'invention se transposent *mutatis mutandis* au présent support physique.

L'invention propose aussi un système informatique distribué comprenant des moyens pour mettre en oeuvre l'étape d'accès aux données cryptées du procédé selon l'invention. L'invention propose également un programme d'ordinateur muni d'instructions qui lorsque le programme d'ordinateur est exécuté, le conduisent à mettre en oeuvre l'accès aux données cryptées du procédé selon l'invention. Il est également proposé, dans le cadre de l'invention, un support informatique lisible par un ordinateur sur lequel est enregistré le programme d'ordinateur. Le support informatique comprend, par exemple, une mémoire numérique, un serveur, une clé USB et/ou un ordinateur. Il peut être dans un nuage de données (« cloud »).

Les modes de réalisation et les avantages du procédé selon l'invention se transposent *mutatis mutandis* au système informatique de traitement distribué, au programme d'ordinateur et au support informatique lisible par un ordinateur selon l'invention.

Un autre objet de cette invention est de fournir une méthode permettant une authentification d'un objet physique qui soit particulièrement fiable et sécurisée. À cet effet, l'invention propose une méthode d'authentification d'un objet physique comprenant un support physique comprenant un tag pour la mise en oeuvre du procédé selon l'invention, la méthode comprenant une exécution (c'est-à-dire une mise en oeuvre) du procédé où les données cryptées comprennent des données d'authentification de l'objet physique.

L'exemple 4 introduit ci-dessus correspond à une implémentation directe de la méthode, de telle sorte que les avantages qui y sont associés se transposent à celle-ci, de sorte que la méthode répond pleinement à l'autre objet de l'invention. En particulier, l'utilisation du tag et du procédé selon l'invention permettent une authentification à la fois fiable et sécurisée comme décrit ci-avant génériquement au regard du procédé.

Il est noté que l'exemple 3 introduit ci-dessus peut aussi être vu comme une implémentation de cette méthode, les données ayant trait à un monument ou à un défunt pouvant tout à fait être considérées comme des données d'authentification du monument ou de la tombe du défunt.

Un autre objet de l'invention est de mettre en oeuvre une sonnette qui soit simple et peu coûteuse à installer et à utiliser. À cet effet, l'invention propose une méthode de mise en oeuvre d'une sonnette, la méthode comprenant :
- une fourniture d'un support physique support physique comprenant un tag pour la mise en oeuvre du procédé selon le mode de réalisation préféré de l'exemple 5 introduit ci-avant ;
- une première lecture du tag au moyen d'un premier dispositif électronique ;
- une complétion les données cryptées par des données cryptées additionnelles de transmission du signal au premier dispositif électronique ;
- une fixation du support physique sur un élément constitutif d'une construction ;
- une deuxième lecture du tag au moyen d'un deuxième dispositif électronique ;
- une transmission du signal au premier dispositif électronique par accès du deuxième dispositif électronique aux données cryptées.

Une formulation équivalente des étapes de cette méthode est la suivante :
- une fourniture d'un support physique 2 sur lequel est reproduit un tag 1 pour la mise en oeuvre du procédé selon le mode de réalisation préféré de l'exemple 5 introduit ci-avant ;
- une première exécution dudit procédé dans laquelle il est implémenté :
   - une première lecture du tag via un premier dispositif électronique ;
   - une complétion les données cryptées par des données cryptées additionnelles de transmission du signal au premier dispositif électronique ;
- une fixation du support physique sur un élément constitutif d'une construction ;
- une deuxième exécution dudit procédé dans laquelle il est implémenté :
   - une deuxième lecture du tag via un deuxième dispositif électronique ;
   - une transmission du signal au premier dispositif électronique par accès du deuxième dispositif électronique aux données cryptées.

Ces deux formulations sont considérées de façon équivalente.

Les étapes mentionnées sont de préférence exécutées dans cet ordre. Les données cryptées additionnelles comprennent par exemple une caractérisation du signal. Lorsqu'il y est accédé par le deuxième (ou plus généralement quelconque) dispositif électronique via l'application numérique, elles conduisent de préférence ce dernier à mettre en oeuvre la transmission du signal audit premier dispositif électronique.

Les premier et deuxième dispositifs électroniques sont typiquement distincts lors d'une exécution habituelle de la méthode. Une exécution de la méthode reste cependant possible dans le cas contraire.

L'implémentation de la méthode de mise en oeuvre d'une sonnette (digitale) correspond à la description de l'exemple 5 introduit ci-dessus, de telle sorte que les avantages qui y sont associés se transposent directement à celle-ci. La mise en oeuvre de la sonnette revient en particulier à la transmission du signal (par exemple sonore et/ou lumineux et/ou d'activation d'une fonctionnalité du dispositif électronique) au premier dispositif électronique, la transmission agissant comme « avertisseur » semblablement à l'alerte sonore consécutif à la pression exercée sur une sonnette physique placée à côté d'une portée d'entrée d'un bâtiment.

La mise en oeuvre de la sonnette selon la méthode est plus simple qu'avec une sonnette physique nécessitant une installation et un entretien physique. Il est en outre aisé de déterminer la configuration de la sonnette par la complétion des données par les données cryptées additionnelles consécutivement à la première lecture du tag, ce qui n'est pas le cas avec une sonnette physique.

L'utilisation du tag et du procédé selon l'invention assurent de la fiabilité et la sécurité de la méthode de mise en oeuvre d'une sonnette. En particulier, l'accès aux données cryptées par le deuxième dispositif électronique ne signifie pas que les données sont lisibles ou stockées sur le deuxième dispositif électronique, mais plutôt que la transmission du signal peut être mise en oeuvre par cet accès via la chaîne de blocs. De cette façon, les données relatives au signal et/ou au premier dispositif électronique (par exemple, un numéro de téléphone) restent cryptées et non corruptibles dans la chaîne de blocs, tout en permettant la mise en oeuvre de la méthode selon l'invention.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 illustre schématiquement d'un tag pour la mise en oeuvre du procédé selon l'invention ;
- les figures 1A et 1B illustrent chacun un exemple de tel tag ;
- la figure 2 illustre schématiquement la mise en oeuvre d'un mode de réalisation du procédé selon l'invention ;
- la figure 3 représente un diagramme simplifié des flux d'un mode de réalisation du procédé selon l'invention.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description de modes de réalisation de l'invention

Cette partie présente une description de modes de réalisation préférés de la présente invention. Cette dernière est décrite avec des réalisations particulières et des références à des figures mais l'invention n'est pas limitée par celles-ci. En particulier, les dessins décrits ci-dessous ne sont que schématiques et ne sont pas limitants.

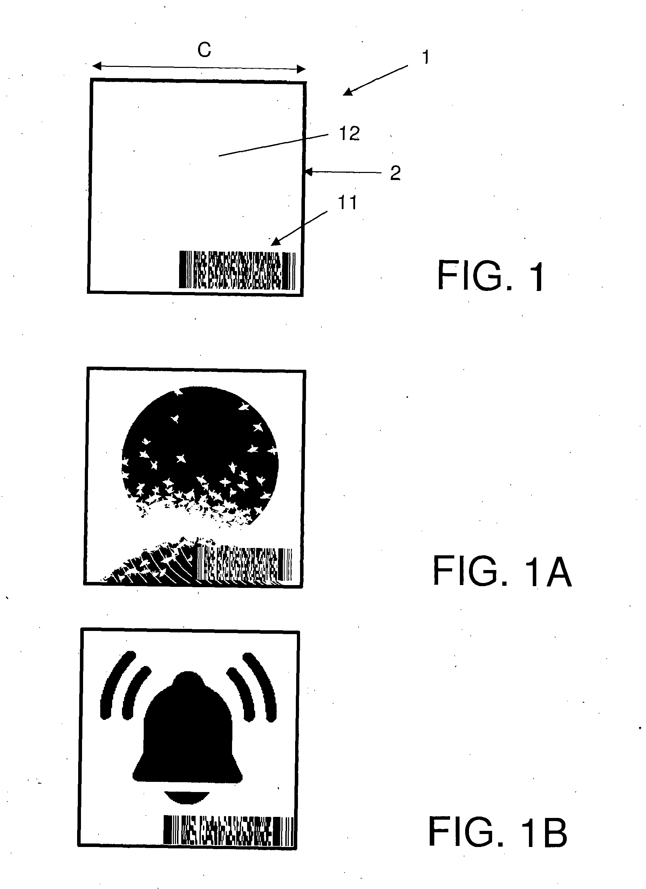

La figure 1 illustre un exemple schématique de tag 1 pour la mise en oeuvre du procédé selon l'invention. Le tag comprend une première zone avec un code-barre 11 à deux dimensions codé au format PDF-417, et une deuxième zone 12 avec une illustration à finalité décorative. Les deux zones forment par exemple un carré de côté C centimètres, où C est par exemple 4, 5, 6, 7 ou 8. Le tag 1 est imprimé sur un support physique 2 de dimensions identiques ou semblables, par exemple, sur une étiquette autocollante (ou sticker) de façon à pouvoir être fixé de façon rapide et aisée sur une large gamme d'objets. Les dimensions du tag 1 et du support physique 2 rendent ce dernier particulièrement maniable.

Les figures 1A et 1B illustrent des exemples de tags 1 sur le même support physique 2. L'illustration peut avoir vocation à consacrer l'unicité du tag 1 par un dessin visuellement attractif, unique et spécifique (figure 1A). Elle peut aussi avoir vocation à indiquer de façon compréhensible l'utilisation à laquelle est destinée le tag 1 (figure 1B où la cloche représentée a vocation à indiquer la mise en oeuvre d'une sonnette digitale comme décrit dans l'exposé de l'invention). Il est possible de combiner les deux types illustrations sur un seul tag 1.

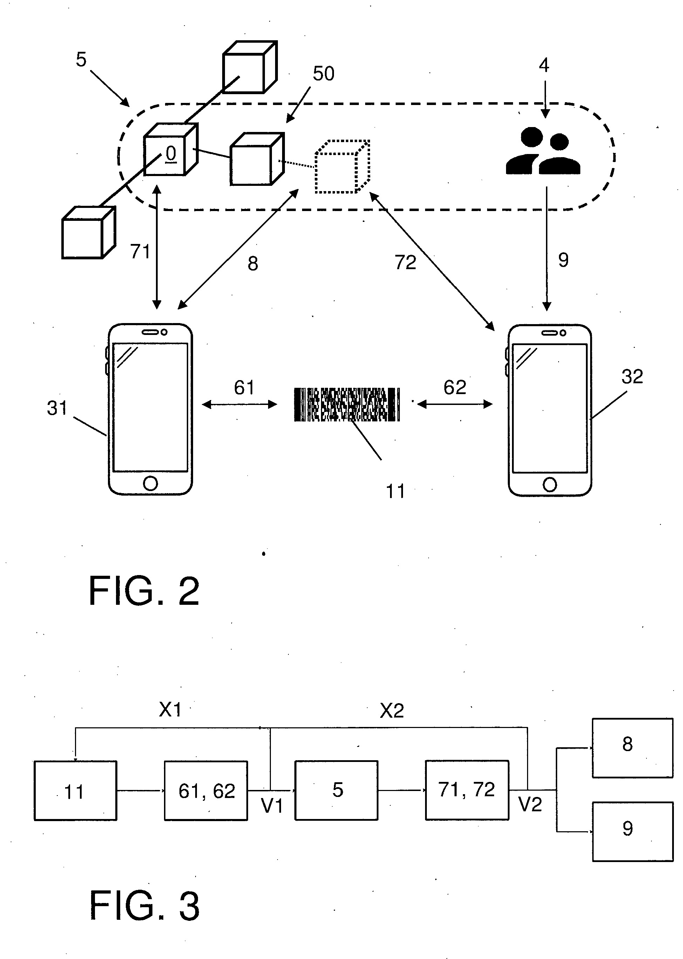

Alternativement à la description qui précède, le tag peut aussi être interprété comme sa partie « opérante », à savoir le code-barre 11, l'illustration imprimée sur le sticker faisant office de support physique dans son ensemble. Par facilité, seul le code-barre 11 est ainsi illustré en figure 2.

La figure 2 représente une mise en oeuvre du procédé selon une réalisation de l'invention. Aux fins de celle-ci, un premier 31 et un deuxième 32 dispositifs électroniques sont utilisés. Ces derniers sont, par exemple, des smartphones, Ils comprennent plus généralement un écran, un processeur, un lecteur optique et/ou une caméra, tel qu'il est connu de l'homme du métier. Un accès à l'Internet est en outre possible à partir des dispositifs électroniques 31, 32.

Une application numérique permettant d'établir une communication avec une chaîne de blocs 5 est chargée sur les dispositifs électroniques 31, 32. Le tag 1 (ou plus précisément son code-barre 11) est enregistré sur la chaîne de blocs 5 de sorte qu'il y est recensé de façon authentifiable comme existant et émis (sur le support physique 2). Le ou les blocs correspondant aux données cryptées de cet enregistrement sont notés par 0. Le tag 1 est associé de façon univoque à ce ou ces blocs 0 dans la chaîne de blocs 5. Il est unique.

L'acquéreur du tag 1 l'utilise 61 alors pour la première fois en scannant le code-barre 11 au moyen de son dispositif électronique 31, ce qui lui donne accès 71 aux données cryptées par l'établissement de la communication susdite avec la chaîne de blocs 5. Cet accès 71 comprend la création 8 d'une sous-chaîne de blocs 50 à partir du ou des blocs 0 par l'intermédiaire d'instructions transmises, par exemple par cet acquéreur, à partir de son dispositif électronique 31 et via l'application numérique. De nouveaux blocs formant la sous-chaîne de blocs 50 correspondent à ces données cryptées additionnelles qui complètent de façon progressive les données cryptées existantes au fur et à mesure des instructions.

De préférences ces données cryptées mettent en oeuvre un service digital 4 dans la chaîne de blocs 5. Un autre utilisateur du procédé selon l'invention ayant accès physiquement au tag 1 peut alors l'utiliser 62, par exemple en scannant le code-barre 11 au moyen de son propre dispositif électronique 32. Ceci lui donne accès 72 aux données cryptées, en particulier celles de la sous-chaîne de blocs 50, par l'établissement de la communication susdite avec la chaîne de blocs 5. Cet accès 72 est limité à un accès en lecture depuis la chaîne de blocs 5 et vise à permettre une consultation et/ou une utilisation 9 du service digital 4.

La chaîne de blocs 5 utilisées dans le cadre de l'invention est par exemple du type Polkadot. Une telle chaîne de blocs 5 est adaptée à l'invention car elle possède l'avantage d'être distribuable et évolutive, tout en permettant d'exploiter diverses librairies de codes existantes.

La figure 3 illustre un diagramme relatif au procédé selon l'invention décrit ci-dessus. En particulier, de gauche à droite, l'utilisateur détient le tag 1 et le code-barre 11, et l'utilise 61, 62 comme décrit ci-dessus. Si le code-barre 11 lu est dans un format reconnu par l'application mobile, alors un accès à la chaîne de blocs est possible (cas V1). Dans le cas contraire, il ne se passe rien (cas X1). L'accès 71, 72 à la chaîne de blocs établi d'abord si le code-barre 11 est enregistré dans la chaîne de bloc (existence du ou des blocs 0). Dans l'affirmative (cas V2), l'accès est rendu possible pour l'utilisateur (par la création 8 de la sous-chaîne de blocs 50, et donc du service digital associé, en cas de première utilisation du tag 1, ou par la consultation ou l'utilisation 9 du service digital en cas d'utilisation ultérieure du tag 1). Dans la négative (cas X2), il ne se passe rien.

La présente invention a été décrite ci-dessus en relation avec des modes de réalisations spécifiques, qui ont une valeur purement illustrative et ne doivent pas être considérés comme limitatifs. Il apparaîtra directement pour l'homme du métier que l'invention n'est pas limitée aux exemples illustrés ou décrits ci-dessus, et que sa portée est plus largement définie par les revendications ci-après introduites.

## Revendications

1. Procédé d'exploitation de données cryptées accessibles depuis une chaîne de blocs (5), le procédé comprenant une utilisation (61, 62) d'un tag (1) reproduit sur un support physique (2), et un accès (71, 72) à ces données cryptées mis en oeuvre par ordinateur consécutivement à l'utilisation (61, 62) de ce tag.

2. Procédé selon la revendication 1, dans lequel le tag (1) est unique.

3. Procédé selon la revendication 1 ou 2, dans lequel le tag (1) comprend un code-barre (11) à deux dimensions.

4. Procédé selon l'une quelconque des revendications 1 à 3, dans lequel l'utilisation (61, 62) du tag (1) comprend une lecture du tag au moyen d'un dispositif électronique (31, 32), et dans lequel l'accès (71, 72) aux données cryptées comprend une communication entre le dispositif électronique (31, 32) et la chaîne de blocs (5) via une application numérique.

5. Procédé selon la revendication 4, dans lequel l'accès aux données cryptés n'est possible que si le tag (1) lu est dans un format reconnu par l'application mobile.

6. Procédé selon l'une quelconque des revendications 1 à 5, dans lequel, lorsque l'utilisation du tag (1) est une première utilisation (61), l'accès (71) aux données cryptées comprend une création (8) d'une sous-chaîne de blocs (50) de la chaîne de blocs (5) à partir d'un ou plusieurs blocs (0) de celle-ci donnant accès aux données cryptées.

7. Procédé selon la revendication 6, lorsqu'elle dépend de la revendication 4, dans lequel la sous-chaîne de blocs (50) est créée par des instructions transmises à partir du dispositif électronique (31) via l'application numérique.

8. Procédé selon la revendication 7, dans lequel la sous-chaîne de blocs (50) est modifiée après sa création (8) au moyen d'une clé numérique d'accès dédiée et par transmission d'instructions ultérieures à partir du dispositif électronique (31) via l'application numérique.

9. Procédé selon l'une quelconques des revendications 6 à 8, dans lequel les données cryptées sont complétées par des données cryptées additionnelles correspondant aux blocs de la sous-chaîne de blocs (50) lors de sa création (8) et/ou modification.

10. Procédé selon l'une quelconque des revendications 1 à 9, dans lequel, lorsque l'utilisation du tag (1) est une deuxième utilisation ou une utilisation ultérieure (62), l'accès (72) aux données cryptées est limité à un accès en lecture et/ou en exécution d'un programme informatique depuis la chaîne de blocs (5).

11. Procédé selon l'une quelconque des revendications 1 à 10, dans lequel, les données cryptées mettent en oeuvre un service digital (4).

12. Procédé selon la revendication 11 lorsqu'elle dépend de la revendication 7, dans lequel le service digital (4) correspond à une transmission d'un signal au dispositif électronique (31) à partir duquel sont transmises les instructions de création (8) de la sous-chaîne de blocs (50) lorsque l'utilisation du tag (1) est une deuxième utilisation ou une utilisation ultérieure (62).

13. Méthode d'authentification d'un objet physique comprenant un support physique (2) sur lequel est reproduit un tag (1) pour la mise en oeuvre du procédé selon l'une quelconque des revendications 1 à 12, les données cryptées comprenant des données d'authentification de l'objet physique, la méthode comprenant une exécution dudit procédé.

14. Méthode de mise en oeuvre d'une sonnette, la méthode comprenant :
- une fourniture d'un support physique (2) sur lequel est reproduit un tag (1) pour la mise en oeuvre du procédé selon la revendication 12 lorsqu'elle dépend de la revendication 9 ;
- une première exécution dudit procédé dans laquelle il est implémenté :
• une première lecture (61) du tag (1) au moyen d'un premier dispositif électronique (31) ;
• une complétion les données cryptées par des données cryptées additionnelles de transmission du signal au premier dispositif électronique (31) ;
- une fixation du support physique (2) sur un élément constitutif d'une construction ;
- une deuxième exécution dudit procédé dans laquelle il est implémenté :
• une deuxième lecture (62) du tag (1) au moyen d'un deuxième dispositif électronique (32) ;
• une transmission du signal au premier dispositif électronique (31) par accès (72) du deuxième dispositif électronique (32) aux données cryptées.

15. Système informatique distribué comprenant des moyens pour mettre en oeuvre l'accès (71, 72) aux données cryptées du procédé selon l'une quelconque des revendications 1 à 12.

16. Programme d'ordinateur comprenant des instructions qui, lorsque le programme d'ordinateur est exécuté, le conduisent à mettre en oeuvre l'accès (71, 72) aux données cryptées du procédé selon l'une quelconque des revendications 1 à 12.

17. Support lisible par un ordinateur sur lequel est enregistré le programme d'ordinateur selon la revendication 16.
